# EUROPÄISCHE PATENTSCHRIFT

(11) **EP 1 638 757 B1**
(45) Veröffentlichungstag und Bekanntmachung des Hinweises auf die Patenterteilung: **11.04.2007**
(21) Anmeldenummer: 04740117.9
(22) Anmeldetag: 21.06.2004
(51) Int. Cl.: B29C 65/10, B29C 65/20

(54) **KUNSTSTOFF-SCHWEISSMASCHINE**
PLASTIC WELDING MACHINE
MACHINE A SOUDER LES MATIERES PLASTIQUES

(30) Priorität: 25.06.2003 DE 10328498
(43) Veröffentlichungstag der Anmeldung: 29.03.2006
(73) Patentinhaber: PFAFF Industrie Maschinen AG, 67655 Kaiserslautern (DE)
(72) Erfinder: HALFMANN, Wilfried, 67661 Kaiserslautern (DE); MAUE, Bern, 67757 Kreimbach-Kaulbach (DE); KRETSCHMANN, Achim, 67722 Winnweiler (DE); NEUROHR, Manfred, 67659 Kaiserslautern (DE)
(86) Internationale Anmeldenummer: PCT/EP2004/006677
(87) Internationale Veröffentlichungsnummer: WO 2004/113055

(56) Entgegenhaltungen:
- DE-A- 4 230 882
- DE-A- 19 854 259
- DE-U- 9 114 932
- US-A- 5 466 326
- US-B1- 6 471 803

## Beschreibung

Die Erfindung betrifft eine Kunststoff Schweißmaschine, insbesondere Heißluft- oder Heizkeil-Schweißmaschine, zum stoffschlüssigen Verbinden mindestens zweier Lagen, wobei die Schweißmaschine Schweißwerkzeuge, jeweils mindestens ein Paar Antriebsrollen sowie eine einen Rechner umfassende elektronische Steuervorrichtung zur Temperaturführung der Schweißwerkzeuge und zur Einstellung und Regelung des Druckes der Antriebsrollen enthält.

Eine derartige Schweißmaschine ist im wesentlichen bereits aus der DE 198 54 259 C2 bekannt. Dabei handelt es sich um eine Heißsiegelmaschine, bei welcher zwei durch eine Nähnaht verbundene Lagen mittels Aufschweißens eines Bandes nachträglich abgedichtet werden. Bei dieser bekannten Schweißmaschine überwacht eine elektronische Steuervorrichtung alle vorgegebenen relevanten Schweißparameter, um eine bestimmte Schweißnahtgüte sicherzustellen.

Allerdings erfolgt bei der bekannten Schweißvorrichtung die eigentliche Ablaufsteuerung durch eine Bedienungsperson während des Schweißvorganges (z.B. durch Betätigung eines Fußpedales). Sollen daher beispielsweise zwei Lagen miteinander verbunden werden, welche einen kurvenförmigen Abschnitt enthalten, so verändert die jeweilige Bedienungsperson bei Erreichen des kurvenförmigen Abschnittes die Schweißparameter, indem sie die Stellung des Fußpedales verändert, so daß die Vorschubgeschwindigkeit der beiden Antriebsrollen reduziert und in Abhängigkeit davon auch z.B. die Temperatur der Schweißwerkzeuge verändert werden. Beim Erreichen des Kurvenendes wird dann zur Erhöhung der Vorschubgeschwindigkeit der Antriebsrollen und zur Erhöhung der Temperatur der Schweißwerkzeuge wiederum die Stellung des Fußpedales verändert.

Nachteilig ist bei diesen bekannten Schweißmaschinen unter anderem, daß das Erkennen des Kurvenanfanges und Kurvenendes relativ fehlerbehaftet ist und unter anderem von der augenblicklichen Verfassung der jeweiligen die Maschine bedienenden Person abhängt.

Der Erfindung liegt die Aufgabe zugrunde, eine Kunststoff Schweißmaschine anzugeben, bei welcher die Ablaufsteuerung des Schweißvorganges weitgehend unabhängig von der jeweiligen Bedienungsperson der Schweißmaschine ist.

Diese Aufgabe wird erfindungsgemäß durch die Merkmale des Anspruchs 1 gelöst. Weitere, besonders vorteilhafte Ausgestaltungen der Erfindung offenbaren die Unteransprüche.

Die Erfindung beruht im wesentlichen auf dem Gedanken, die Ablaufsteuerung des Schweißvorganges ohne Einwirkung einer Bedienungsperson nur mit Hilfe eines in einem Speicher der Steuervorrichtung abgelegten Ablaufprogrammes (Schweißprogrammes) vorzunehmen. Dabei wird der gesamte zu verschweißende Bereich der beiden Lagen vor Durchführung des Schweißvorganges in mehrere Schweißabschnitte eingeteilt, wobei für jeden Schweißabschnitt die einzuhaltenden (primären) Schweißparameter, wie die Temperatur der Schweißwerkzeuge bzw. des Schweißmediums, die Vorschubgeschwindigkeit der beiden oder einer der beiden Antriebsrollen, der Rollenanpreßdruck etc., ermittelt werden. Die diesen Einstellungen entsprechenden Parameter werden in einem Datenspeicher der Steuervorrichtung abgelegt, auf den das Ablaufprogramm Zugriff hat.

Bei dem eigentlichen Schweißvorgang ermittelt die Steuervorrichtung der Schweißmaschine dann mit Hilfe eines Wegmeßsystems die jeweils bereits verschweißte Wegstrecke und vergleicht diese Werte mit einem den Beginn eines neuen Schweißabschnittes charakterisierenden Vorgabewert. Wird der Vorgabewert erreicht, so veranlaßt das Ablaufprogramm automatisch die Einstellung der für den neuen Schweißabschnitt charakteristischen Schweißparameter.

Bei dem eingangs erwähnten Beispiel eines einen kurvenförmigen Schweißabschnitt enthaltenden Schweißbereiches würde man vorzugsweise insgesamt drei Schweißabschnitte festlegen, wobei die Schweißparameter dann derart vorgegeben werden, daß die Antriebsrollen sich in den beiden gerade verlaufenden Schweißabschnitten synchron drehen, während in dem kurvenförmigen Schweißabschnitt die Schweißparameter derart gewählt sind, daß die obere Rolle etwas schneller läuft, um die Mehrweite der oberen Lage zu kompensieren.

Bei Verwendung der erfindungsgemäßen Schweißmaschine erfolgt der Schweißablauf also im wesentlichen ohne Zutun einer Bedienungsperson. Die Streckenlängen der Schweißabschnitte werden vorher festgelegt und bei jedem Schweißvorgang dann sehr präzise wiederholt. Die erfindungsgemäße Schweißmaschine ist daher vor allem dann besonders vorteilhaft einsetzbar, wenn immer wiederkehrende Gleichteile hergestellt werden sollen. So kann z.B. ein komplettes Kleidungsstück teilautomatisiert hergestellt werden, bei dem für die Herstellung von z.B. zehn unterschiedlichen Schweißnähten eine entsprechende Anzahl von Schweißprogrammen mit unterschiedlichen Parametern und Wegstrecken berücksichtigt werden müssen und welche immer wiederkehrend in einer Sequenz ablaufen. Damit kann eine komplette Charge einer bestimmten Konfektionsgröße abgearbeitet werden, bei der die Bedienungsperson lediglich das Schweißgut in einer vorher festgelegten Reihenfolge in die Schweißmaschine einlegen, das Startsignal geben und nur noch richtungsmäßig führen muß.

Als vorteilhaft hat es sich erwiesen, wenn diejenigen Schweißparameter, die für den gesamten Schweißvorgang konstant gehalten werden können (im folgenden auch als sekundäre Schweißparameter bezeichnet), lediglich zu Beginn des jeweiligen Schweißvorganges mit Hilfe des Ablaufprogrammes eingestellt werden. Im wesentlichen handelt es sich bei den sekundären Schweißparametern um Parameter, welche die Einstellung des Beschleunigungs- und des Bremsverhaltens sowie der Länge der Startverzögerung zwecks Kompensation des Aufheizvorganges der Schweißwerkzeuge festlegen (Rollenparameter) sowie um Parameter, welche die Ausbildung der jeweiligen Düse oder des Keiles (schmal, mittel oder breit) betreffen (Schweißwerkzeugparameter).

Als vorteilhaft hat es sich ferner erwiesen, wenn die Steuervorrichtung einen Speicher umfaßt, in dem auf einem Bildschirm der Schweißmaschine darstellbare Informationen abspeicherbar sind, die dem jeweils aktuellen Schweißprogramm zugeordnete Kommentare und/oder Einstellungen der Schweißwerkzeuge wiedergeben (sogenannte Notizblockangaben). Diese Informationen können beispielsweise beim Erstellen des jeweiligen Ablaufprogrammes in die elektronische Steuervorrichtung eingegeben werden.

Um sicherzustellen, daß die Notizblockangaben auch beachtet und umgesetzt werden, kann den dargestellten Angaben auch Freigabetasten zugeordnet werden, so daß das ensprechende Ablaufprogramm nur dann freigeschaltet wird, wenn die jeweilige Bedienungsperson die Freigabetaste (z.B. ein Touchfeld des Bildschirmes) drückt.

Bei einer ersten Ausführungsform der Erfindung umfaßt das Wegmeßsystem der Kunststoff-Schweißmaschine mindestens einen Tachogenerator.

Weitere Einzelheiten und Vorteile der Erfindung ergeben sich aus den folgenden anhand von Figuren erläuterten Ausführungsbeispielen. Es zeigen:
Fig. 1 das Blockschaltbild einer erfindungsgemäßen Heißluft-Schweißmaschine;
Fig.2-4 drei Beispiele für die Verwendung der erfindungsgemäßen Schweißmaschine und
Fig.5 ein Ausführungsbeispiel einer auf dem Bildschirm der erfindungsgemäßen Schweißmaschine dargestellten Notizblockfunktion.

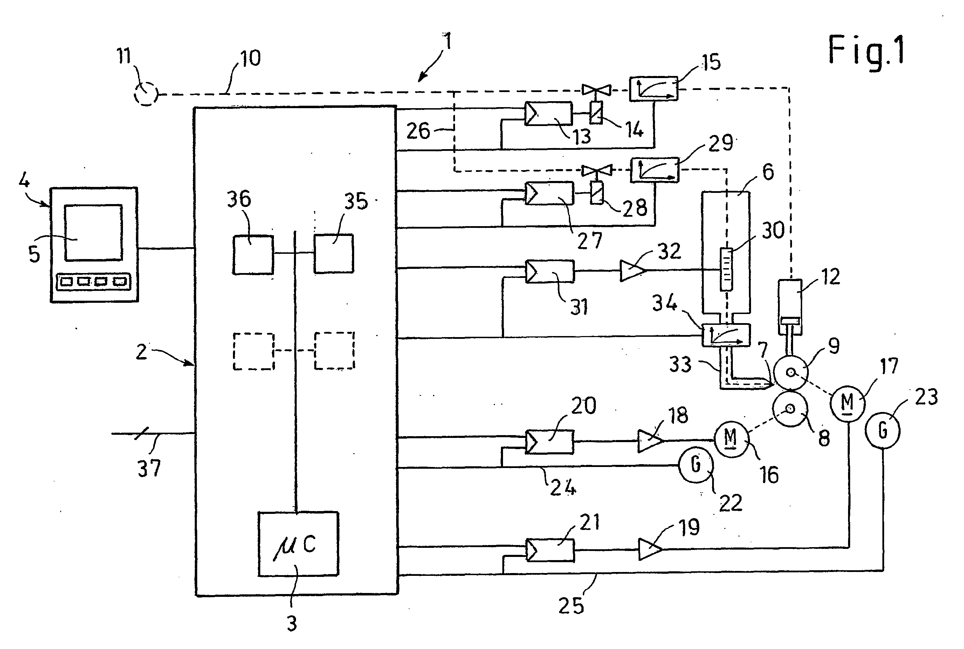

In Fig.1 ist mit 1 eine schematisch dargestellte Heißluft-Schweißmaschine bezeichnet (vgl. zum Aufbau und Funktionsweise derartiger Schweißmaschinen auch die eingangs erwähnte DE 198 54 259 C2). Die Schweißmaschine 1 umfaßt eine elektronische Steuervorrichtung 2, die unter anderem einen Mikrocomputer 3 enthält. Die Steuervorrichtung 2 ist mit einem Bedienteil 4 mit Bildschirm 5 verbunden.

Außerdem umfaßt die erfindungsgemäße Schweißmaschine 1 einen Lufterhitzer 6, der mit einer Heißluftdüse 7 verbunden ist, welche zwischen die zu verschweißenden Lagen (nicht dargestellt) gerichtet ist, sowie ein Rollenandrucksystem, welches zwei gegenüberliegende Antriebsrollen 8, 9 zum Vorschub der beiden Lagen und einen über eine Druckluftleitung 10 mit einer Druckluftquelle 11 verbundenen Druckluftzylinder 12 umfaßt.

Der Druckluftzylinder 12 wird über einen Regler 13 betrieben, dem als Stellglied ein Servoventil 14 zugeordnet ist. Das Servoventil 14 beeinflußt den Druck der von der Druckluftquelle 11 über die Leitung 10 gelieferten Druckluft. Zur Erfassung des Druck-Istwertes dient ein Drucksensor 15, dessen Signal der elektronischen Steuervorrichtung 2 und dem Regler 13 zugeleitet wird.

Die beiden Antriebsrollen 8, 9 werden jeweils über einen eigenen Motor 16, 17 angetrieben, die jeweils über ein Leistungsteil 18, 19 und einen Regler 20, 21 mit der elektronischen Steuervorrichtung 2 verbunden sind. Zur Bestimmung der Abtriebsdrehzahl des jeweiligen Motors 16, 17 ist dieser mit einem Tachogenerator 22, 23 verbunden, dessen Meßergebnisse ebenfalls der Steuervorrichtung 2 über eine entsprechende Leitung 24, 25 zugeführt werden.

Der Lufterhitzer 6 ist über die Druckluftleitung 10 und eine Abzweigungsleitung 26 mit der Druckluftquelle 11 verbunden. Zur Regelung der Luftmenge dient ein Regler 27, dem als Stellglied ein Servoventil 28 zugeordnet ist. Zur Erfassung des Istwertes der dem Lufterhitzer 6 zugeführten Luftmenge dient ein Sensor 29, dessen Signal der Steuervorrichtung 2 und dem Regler 27 zugeleitet wird.

Der Lufterhitzer 6 umfaßt ein elektrisch betriebenes Heizelement 30, das über einen mit der Steuervorrichtung 2 verbundenen Regler 31 und ein Leistungsteil 32 betrieben wird. Zur Ermittlung des Istwertes der Heißlufttemperatur dient ein in dem Verbindungsrohr 33 zur Heißluftdüse 7 angeordneter Sensor 34, der mit der Steuervorrichtung 2 und dem Regler 31 verbunden ist.

Die elektronische Steuervorrichtung 2 umfaßt außer dem Mikrocomputer 3 unter anderem auch einen Programmspeicher 35, in dem ein Ablaufprogramm (Schweißprogramm) gespeichert ist, welches den gesamten Schweißablauf der Schweißmaschine 1 steuert, sowie einen Datenspeicher 36, in dem die durch das Ablaufprogramm abrufbaren Daten gespeichert sind. Sowohl die Daten als auch das Ablaufprogramm können über eine Schnittstelle und eine Leitung 37 in die Steuervorrichtung 2 geladen werden.

Zur Durchführung des Schweißvorganges werden vorher Schweißabschnitte mit vorgegebenen Längen festgelegt, innerhalb derer die primären Schweißparameter, wie die Temperatur der Heißluft, die Vorschubgeschwindigkeit der beiden Antriebsrollen 8, 9, die Luftmenge und der Rollenanpreßdruck konstant sein sollen. Der Mikrocomputer 3 der Steuervorrichtung 2 ermittelt dann während des Schweißvorganges die zurückgelegte Wegstrekke der miteinander verschweißten Lagen, in dem die mittels der Tachogeneratoren 22, 23 gemessenen Drehzahlwerte der Motoren 16, 17 bestimmt und ausgewertet werden. Sobald der Mikrocomputer 3 durch einen Vergleich feststellt, daß der jeweils aktuelle Schweißabschnitt beendet ist, veranlaßt die Steuervorrichtung 2, daß die für den entsprechenden neuen Schweißabschnitt charakteristischen und in dem Datenspeicher 36 abgelegten Schweißparameter ausgelesen und die entsprechenden Änderungen eingestellt werden.

Außer den primären Schweißparametern werden vor dem eigentlichen Schweißvorgang auch sogenannte sekundäre Schweißparameter in dem Datenspeicher 36 oder einem weiteren Datenspeicher abgelegt. Diese sekundären Schweißparameter führen zu Einstellungen der Schweißmaschine 1, welche sich während des gesamten Schweißvorganges nicht ändern. Im wesentlichen handelt es sich bei den sekundären Schweißparametern um Parameter, welche die Einstellung des Beschleunigungs- und des Bremsverhaltens sowie der Länge der Startverzögerung (zwecks Kompensation des Aufheizvorganges der Schweißwerkzeuge) festlegen bzw. um Parameter, welche die Größe der Heißluftdüse bzw. im Falle einer Heizkeil-Schweißmaschine die Keilgröße betreffen, die schmal, mittel oder breit sein können.

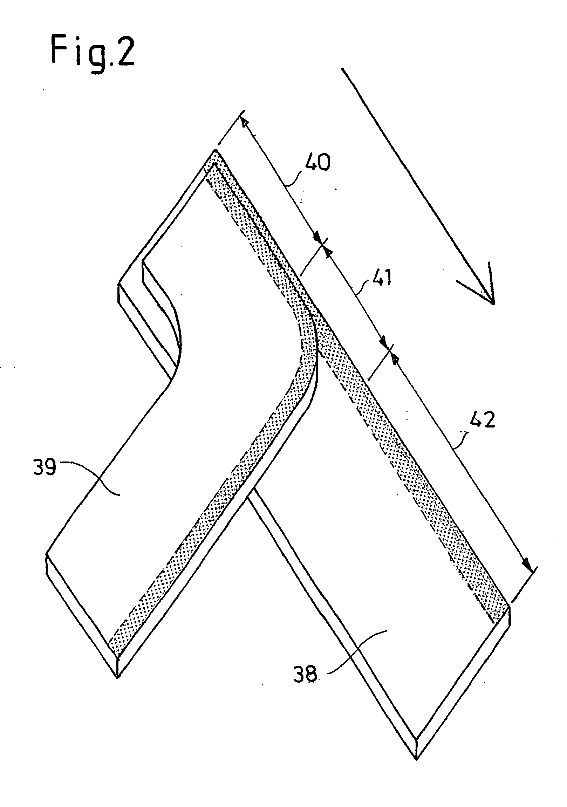

Nachfolgend wird mit Hilfe dreier in den Fig.2-4 dargestellten Beispielen die Erfindung näher erläutert.

Fig.2 zeigt das Verschweißen einer mit 38 bezeichneten geraden unteren Lage mit einer runden oberen Lage 39, wie dieses beispielsweise bei dem Anschweißen eines Ärmels vorkommen kann.

In diesem Fall werden drei Schweißabschnitte 40-42 festgelegt. Dabei müssen die Motoren 16, 17 von der Steuervorrichtung derart angesteuert werden, daß sich die Antriebsrollen 8, 9 in dem Schweißabschnitt 40 synchron drehen. In dem Schweißabschnitt 41 werden die Motoren 16, 17 hingegen derart angesteuert, daß die obere Antriebsrolle 9 sich gegenüber der unteren Antriebsrolle 8 etwas schneller dreht, um die Mehrweite der oberen Lage 39 zu kompensieren. In dem Schweißabschnitt 42 müssen sich die beiden Antriebsrollen 8, 9 hingegen wieder synchron zueinander drehen.

Das Umschalten zwischen den einzelnen Schweißabschnitten 40-42 wird streckenmäßig vorprogrammiert. Beim Schweißen in dem zweiten Schweißabschnitt 42 wird die obere Lage 39 per Hand kantengleich zur unteren Lage 38 von der entsprechenden Bedienungsperson "hereingedreht".

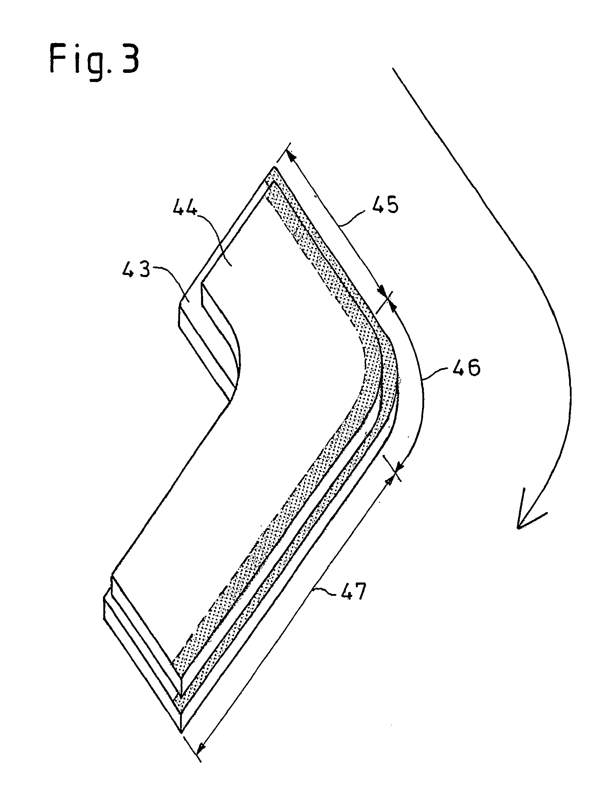

Fig.3 stellt das Aufeinanderschweißen von zwei Lagen 43, 44 dar, die jeweils beide mit einer Rundung versehen sind. Auch in diesem Fall werden drei Schweißabschnitte 45-47 definiert. Dabei kann man im Schweißabschnitt 45 (gerades Stück) schnell schweißen, d.h., die Motoren 16, 17 können eine hohe Drehgeschwindigkeit der Antriebsrollen 8, 9 bewirken und die Temperatur der Heißluft kann relativ hoch sein. Im Schweißabschnitt 46 (Bereich der Rundung) muß vor allem aus Handlingsgründen langsamer geschweißt werden, so daß die Drehgeschwindigkeit der Antriebsrollen 8, 9 langsamer und die Temperatur der Heißluft geringer sein müssen. Für den Schweißabschnitt 47 (gerades Stück) gilt das zu dem Schweißabschnitt 45 Gesagte sinngemäß.

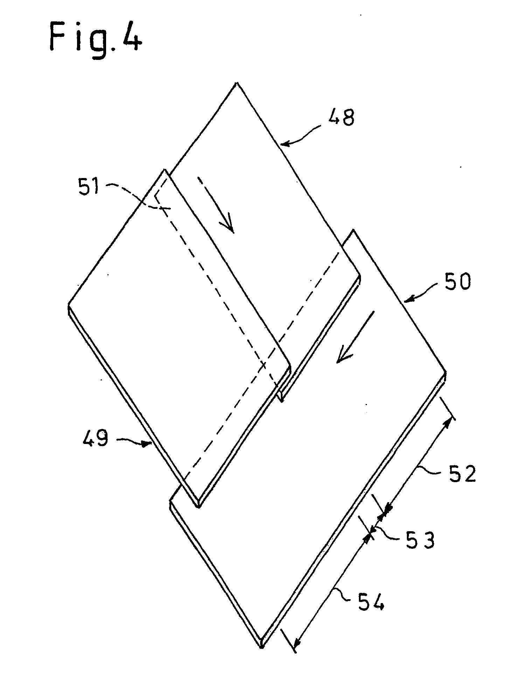

In dem in Fig. 4 dargestellten Ausführungsbeispiel werden drei Lagen 48-50 miteinander verschweißt. Dabei wird in einem ersten Arbeitsgang Lage 48 an Lage 49 angeschweißt, so daß sich eine Schweißnaht 51 ergibt. In einem zweiten Arbeitsgang wird dann die Lage 50 mit der aus den Lagen 48 und 49 bestehende Lage verbunden. Dabei werden wiederum drei Schweißabschnitte 52-54 definiert. Hierbei ergibt sich in dem Schweißabschnitt 53 durch die Schweißnaht 51 ein sogenannter T-Stoß. In diesem Schweißabschnitt ist es angebracht, etwas langsamer, etwas heißer oder mit einem anderen Rollendruck zu fahren.

Die Erfindung ist selbstverständlich nicht auf die beschriebenen Ausführungsbeispiele beschränkt. So kann zur Messung der Schweißabschnitte anstatt eines Tachogenerators auch ein anderer bekannter Wegesensor verwendet werden.

Insbesondere kann es zweckmäßig sein, die einzelnen Schweißabschnitte dadurch festzulegen, daß das Schweißgut mit Markierungen versehen ist, die von einem Sensor abgetastet werden.

Im übrigen gelten die Ausführungen zu der vorstehend beschriebenen Heißluft-Schweißmaschine für Heizkeil-Schweißmaschine sinngemäß. Im wesentlichen wird lediglich das Heißluftsystem durch ein Heizkeilsystem ersetzt. Hingegen muß zur erfindungsgemäßen Ablaufsteuerung auch bei derartigen Schweißmaschinen ein Wegemeßsystem sowie ein Rollenandrucksystem mit unterschiedlicher Ansteuerung der Antriebsrollen vorhanden sein.

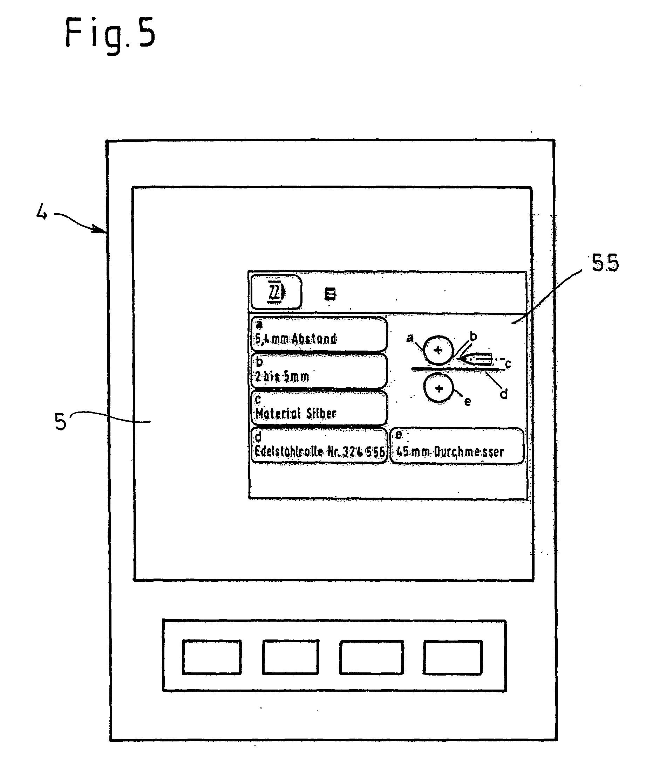

Außerdem hat es sich als zweckmäßig erwiesen, wenn entweder in dem Datenspeicher 36 der Steuervorrichtung 2 oder in einem weiteren Datenspeicher auf dem Bildschirm 5 der Schweißmaschine darstellbare Informationen abspeicherbar sind, die dem jeweils aktuellen Schweißprogramm zugeordnete Kommentare und/oder Einstellungen der Schweißwerkzeuge wiedergeben. Eine entsprechende Darstellung zeigt Fig.5.

Dabei sind mit 5 wiederum der Bildschirm des Bedienteiles 4 und mit 55 eine auf dem Bildschirm 5 wiedergegebene Darstellung bezeichnet, welche die Anordnung des Heizkeiles (bei einer Heizkeil-Schweißmaschine) in bezug auf die Antriebsrollen wiedergibt. Die in die Darstellung eingetragenen Buchstaben a-e werden für die Bedienungsperson in den umrandeten Feldern näher erläutert. Diese Felder können auch als Touchfelder ausgebildet sein, so daß eine Maschinenfreigabe erst erfolgt, wenn z.B. alle Felder gedrückt wurden.

### Bezugszeichenliste

- 1: Kunststoff-Schweißmaschine, Heißluft-Schweißmaschine, Schweißmaschine
- 2: (elektronische) Steuervorrichtung
- 3: Mikrocomputer, Rechner
- 4: Bedienteil
- 5: Bildschirm
- 6: Lufterhitzer
- 7: Heißluftdüse, Schweißwerkzeug
- 8,9: Antriebsrollen
- 10: Druckluftleitung
- 11: Druckluftquelle
- 12: Druckluftzylinder
- 13: Regler
- 14: Servoventil
- 15: Drucksensor
- 16,17: Motoren
- 18,19: Leistungsteile
- 20,21: Regler
- 22,23: Tachogeneratoren
- 24,25: Leitungen
- 26: Abzweigungsleitung
- 27: Regler
- 28: Servoventil
- 29: Sensor
- 30: Heizelement
- 31: Regler
- 32: Leistungsteil
- 33: Verbindungsrohr
- 34: Sensor
- 35: Programmspeicher, Speicher
- 36: Datenspeicher, Speicher
- 37: Leitung
- 38: untere Lage
- 39: obere Lage
- 40-42: Schweißabschnitte
- 43,44: Lagen
- 45-47: Schweißabschnitte
- 48-50: Lagen
- 51: Schweißnaht
- 52-54: Schweißabschnitte
- 55: Darstellung

## Patentansprüche

1. Kunststoff-Schweißmaschine, insbesondere Heißluft- oder Heizkeil-Schweißmaschine, zum stoffschlüssigen Verbinden mindestens zweier Lagen (38, 39; 43, 44; 48-50), wobei die Schweißmaschine (1) Schweißwerkzeuge (7), jeweils mindestens ein Paar Antriebsrollen (8, 9) sowie eine einen Rechner (3) umfassende elektronische Steuervorrichtung (2) zur Temperaturführung der Schweißwerkzeuge (7) und zur Einstellung und Regelung des Druckes der Antriebsrollen (8, 9) enthält, mit den Merkmalen:
a) die elektronische Steuervorrichtung (2) weist mindestens einen Speicher (35) auf, in den ein Ablaufprogramm ladbar ist; welches ein abschnittsweises Verschweißen der beiden Lagen (38, 39; 43, 44; 48-50) steuert, wobei von dem Ablaufprogramm zu Beginn des jeweiligen Schweißabschnittes (40-42; 45-47; 52-54) vorgegebene, für diesen Abschnitt charakteristische primäre Schweißparameter, wie Temperatur der Schweißwerkzeuge (7) oder des jeweiligen Schweißmediums, Vorschubgeschwindigkeit der beiden oder einer der beiden Antriebsrollen (8, 9), Rollenanpreßdruck, eingestellt werden;
b) die Schweißmaschine (1) umfaßt ein mit der elektronischen Steuervorrichtung (2) verbundenes Wegmeßsystem zur Ermittlung der Wegstrecke der miteinander verschweißten Lagen (38, 39; 43, 44; 48-50) während des Schweißvorganges und
c) die elektronische Steuervorrichtung (2) ist derart ausgebildet, daß sie einen Vergleich durchführt zwischen der gemessenen Wegstrecke der jeweils miteinander verschweißten Lagen (38, 39; 43, 44; 48-50) und einem den Beginn des nächsten Schweißabschnittes (40-42; 45-47; 52-54) charakterisierenden Vorgabewert und daß sie bei Übereinstimmung von Meß- und Vorgabewert, die für den entsprechenden neuen Schweißabschnitt (40-42; 45-47; 52-54) charakteristischen Schweißparameter einstellt.

2. Kunststoff-Schweißmaschine nach Anspruch 1, **dadurch gekennzeichnet, daß** das Wegmeßsystem mindestens einen Tachogenerator (22, 23) umfaßt.

3. Kunststoff-Schweißmaschine nach Anspruch 1, **dadurch gekennzeichnet, daß** als Wegemeßsystem ein Sensor vorgesehen ist, welcher die einzelne Schweißabschnitte definierende, auf dem Schweißgut angeordnete Markierungen abtastet.

4. Kunststoff-Schweißmaschine nach Anspruch 1, **dadurch gekennzeichnet, daß** die beiden Antriebsrollen (8, 9) mit unterschiedlichen Drehzahlen antreibbar sind.

5. Kunststoff-Schweißmaschine nach einem der Ansprüche 1 bis 4, **dadurch gekennzeichnet, daß** die Steuervorrichtung (2) einen Speicher umfaßt, in dem auf einem Bildschirm (5) der Schweißmaschine (1) darstellbare Informationen abspeicherbar sind, die dem jeweils aktuellen Schweißprogramm zugeordnete Kommentare und/oder Einstellungen der Schweißwerkzeuge (7) wiedergeben.

6. Kunststoff Schweißmaschine nach Anspruch 5, **dadurch gekennzeichnet, daß** die Steuervorrichtung (2) einen Speicher (36) umfaßt, welcher sekundäre Rollen- und Schweißwerkzeugparameter enthält, welche von dem Ablaufprogramm vor Beginn des Schweißvorganges einstellbar sind und für den gesamten, aus mehreren Schweißabschnitten (40-42; 45-47; 52-54) bestehenden Schweißvorgang wirksam bleiben.

## Claims

1. Plastics welding machine, in particular a hot-air or heated-wedge welding machine, for the cohesive connection of at least two layers (38, 39; 43, 44; 48-50), wherein the welding machine (1) contains welding tools (7), in each case at least one pair of driving rollers (8, 9) as well as an electronic control device (2) comprising a computer (3) for temperature management of the welding tools (7) and for setting and regulating the pressure of the driving rollers (8, 9), having the features:
a) the electronic control device (2) has at least one memory (35), into which a sequential program is loadable, which controls a welding-together of the two layers (38, 39; 43, 44; 48-50) section by section, wherein at the start of the respective welding section (40-42; 45-47; 52-54) preset primary welding parameters characteristic of said section, such as temperature of the welding tools (7) or of the respective welding medium, feed rate of the two or one of the two driving rollers (8, 9), roller contact pressure, are set by the sequential program;
b) the welding machine (1) comprises a position measuring system connected to the electronic control device (2) for determining the travel of the layers (38, 39; 43, 44; 48-50) that have been welded together during the welding operation and
c) the electronic control device (2) is designed in such a way that it carries out a comparison between the measured travel of the layers (38, 39; 43, 44; 48-50) welded together in each case and a default value characterizing the start of the next welding section (40-42; 45-47; 52-54) and that, given a match between measured value and default value, it sets the welding parameters characteristic of the corresponding new welding section (40-42; 45-47; 52-54).

2. Plastics welding machine according to claim 1, **characterized in that** the position measuring system comprises at least one tachogenerator (22, 23).

3. Plastics welding machine according to claim 1, **characterized in that** as a position measuring system a sensor is provided, which detects marks that are disposed on the material to be welded and define the individual welding sections.

4. Plastics welding machine according to claim 1, **characterized in that** the two driving rollers (8, 9) are drivable at different rotational speeds.

5. Plastics welding machine according to one of claims 1 to 4, **characterized in that** the control device (2) comprises a memory, in which may be stored data that are displayable on a display screen (5) of the welding machine (1) and render comments, which are associated with the in each case current welding program, and/or settings of the welding tools (7).

6. Plastics welding machine according to claim 5, **characterized in that** the control device (2) comprises a memory (36), which contains secondary roller- and welding tool parameters that are settable by the sequential program prior to the start of the welding operation and remain effective for the entire welding operation comprising a plurality of welding sections (40-42; 45-47; 52-54).

## Revendications

1. Machine à souder les matières plastiques, en particulier machine à souder à air chaud ou à cale chauffante, pour assembler par venue de matière au moins deux couches (38, 39 ; 43, 44 ; 48-50), la machine à souder (1) comprenant des outils de soudage (7), à chaque fois au moins une paire de rouleaux d'entraînement (8, 9) ainsi qu'un dispositif de commande électronique (2) comprenant un calculateur (3) pour réguler la température des outils de soudage (7) et pour ajuster et réguler la pression des rouleaux d'entraînement (8, 9), avec les caractéristiques suivantes :
a) le dispositif de commande électronique (2) présente au moins une mémoire (35) dans laquelle peut être chargé un programme d'exécution qui commande un soudage par sections des deux couches (38, 39 ; 43, 44 ; 48-50), le programme d'exécution réglant, au début de la section de soudage respective (40-42 ; 45-47 ; 52-54), des paramètres de soudage primaires prédéfinis caractéristiques de cette section, comme la température des outils de soudage (7) ou de l'agent de soudage respectif, la vitesse d'avance des deux ou de l'un des deux rouleaux d'entraînement (8, 9), la pression des rouleaux ;
b) la machine de soudage (1) comprend un système de mesure de course relié au dispositif de commande électronique (2) pour déterminer la course de déplacement des couches (38, 39 ; 43, 44 ; 48-50) soudées l'une à l'autre pendant l'opération de soudage ; et
c) le dispositif de commande électronique (2) est conformé de telle manière qu'il effectue une comparaison entre la course de déplacement mesurée des couches (38, 39 ; 43, 44 ; 48-50) soudées l'une à l'autre et une valeur de consigne caractérisant le début de la section de soudage suivante (40-42 ; 45-47 ; 52-54) et qu'en cas de coïncidence entre la valeur de mesure et la valeur de consigne, il règle les paramètres de soudage caractéristiques pour la nouvelle section de soudage (40-42 ; 45-47 ; 52-54) correspondante.

2. Machine à souder les matières plastiques selon la revendication 1, **caractérisée en ce que** le système de mesure de course comprend au moins un générateur tachymétrique (22, 23).

3. Machine à souder les matières plastiques selon la revendication 1, **caractérisée en ce qu'**il est prévu comme système de mesure de course un capteur qui détecte des marquages placés sur le produit à souder et définissant les différentes sections de soudage.

4. Machine à souder les matières plastiques selon la revendication 1, **caractérisée en ce que** les deux rouleaux d'entraînement (8, 9) peuvent être entraînés avec des vitesses de rotation différentes.

5. Machine à souder les matières plastiques selon l'une des revendications 1 à 4, **caractérisée en ce que** le dispositif de commande (2) comprend une mémoire dans laquelle des informations affichables sur un écran (5) de la machine à souder (1) peuvent être enregistrées, informations qui reflètent des commentaires associés au programme de soudage actuel respectif et/ou des réglages des outils de soudage (7).

6. Machine à souder les matières plastiques selon la revendication 5, **caractérisée en ce que** le dispositif de commande (2) comprend une mémoire (36) qui contient des paramètres secondaires des rouleaux et des outils de soudage qui peuvent être réglés par le programme d'exécution avant le début de l'opération de soudage et qui restent actifs pendant toute la durée de l'opération de soudage constituée de plusieurs sections de soudage (40-42 ; 45-47 ; 52-54).
